# EUROPEAN PATENT APPLICATION

(11) **EP 4 697 015 A1**
(43) Date of publication of application: **18.02.2026**
(21) Application number: 24778726.0
(22) Date of filing: 09.02.2024
(51) Int. Cl.: G01N 23/222, G21C 17/00

(54) **SUBSTANCE DETECTION DEVICE**

(30) Priority: 24.03.2023 JP 2023047902
(71) Applicant: Japan Atomic Energy Agency, Ibaraki 319-1184 (JP)
(72) Inventor: MAEDA, Makoto, Naka-gun, Ibaraki 319-1195 (JP); TOH, Yosuke, Naka-gun, Ibaraki 319-1195 (JP); KOMEDA, Masao, Naka-gun, Ibaraki 319-1195 (JP)
(74) Representative: Grünecker Patent- und Rechtsanwälte PartG mbB
(86) International application number: PCT/JP2024/004440
(87) International publication number: WO 2024/202581

(57) **Abstract**

Precise detection of various materials in a variety of samples is enabled. Used are two independent neutron detectors 20A and 20B for detecting, at different locations, neutrons (neutrons to be detected) N emitted from a sample S by irradiating the sample S with neutrons (irradiation neutrons) N0. When a histogram is created with respect to time difference between each neutron detection at the neutron detector 20A and that at neutron detector 20B, and a region III is identified in the histogram, the magnitude of the region III corresponds to the amount of a nuclear material.

## Description

### BACKGROUND

### [Technical Field]

The present invention relates to a material detection device for detecting, or further quantitatively analyzing, a nuclide within a sample, by detecting neutrons emitted following absorption of neutrons by the material (specific nuclide).

### [Background Art]

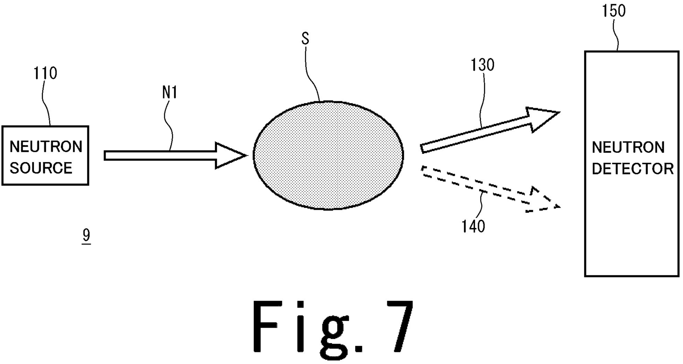

There is known a technology for detecting, or further quantitatively analyzing, a nuclear material (nuclear fission material) by identifying neutrons emitted by the nuclear material. As neutrons have high ability to penetrate substances, the technology can be used even for detecting or quantitatively analyzing a nuclear material present inside a baggage, a container, a vehicle, or the like. FIG. 7 is a diagram schematically illustrating a configuration of a nuclear material detection device 9 for performing such measurement.

In the device 9, a sample S is present as an object of detecting whether or not a nuclear material is present therein, or of quantitatively analyzing the amount of nuclear material, where the sample S is irradiated with neutron radiation N1 (irradiation neutrons) emitted from a neutron source 110. Neutrons to be emitted from the sample S side by the irradiation include an irradiation neutron component 130 that is a component corresponding to the irradiation neutrons having been scattered by the sample S, and include also a fission neutron component 140 that is a component corresponding to neutrons (fission neutrons) generated, when a nuclear material is present in the sample S, as a result of a nuclear reaction (fission reaction) of the nuclear material caused by the irradiation neutrons. The neutron detector 150 detects both the irradiation neutron component 130 and the fission neutron component 140, and in particular, when the fission neutron component 140 is significantly identified, it is possible to determine that a nuclear material is present in the sample S. Further, the amount of the nuclear material can be quantitatively analyzed from the number of neutrons constituting the fission neutron component 140. On the other hand, the irradiation neutron component 130 is present regardless of whether or not a nuclear material is present in the sample S. The direction of the irradiation neutron component 130 and that of the fission neutron component 140 are illustrated to be different from each other in FIG. 7, for convenience, but directions of their emission are not particularly different, and practically, they are present in a mixed manner. In the measurement, as the neutrons (irradiation neutrons and fission neutrons) have high ability to penetrate substances, the measurement practically can be performed even when the sample S is present in a container in FIG. 7.

While the neutron detector 150 can detect neutrons incident on it, it is not easy to determine whether the detected neutrons are of the irradiation neutron component 130 or of the fission neutron component 140, and in particular, discrimination between the irradiation neutron component 130 and the fission neutron component 140 is difficult when both of them are fast neutrons. In this respect, as a method for detecting or quantitatively analyzing a nuclear material by identifying the fission neutron component 140 described above, there is known, for example, DDA (Differential Die-Away Analysis) described in Non-Patent Document 1.

In the DDA, the neutron radiation N1 (irradiation neutrons) is set to be fast neutrons and be emitted only during a short time period, thus having a pulse form. In this case, the irradiation neutrons remaining in the sample S after halting the neutron radiation N1 change into thermal neutrons having low energy, as a result of scattering. For example, in the sample S, irradiation neutrons with 14 MeV energy having been emitted from a DT neutron source lose energy as a result of scattering in the sample S, and consequently change into thermal neutrons about 100 *µ* s after the halting. The thermal neutrons react with a nuclear material in the sample S to emit fission neutrons. As the fission neutrons are fast neutrons, fast neutrons detected at that time are assumed to be fission neutrons.

In this case, the irradiation neutron component 130 and the fission neutron component 140 in FIG. 7 are different from each other in that the former are of thermal neutrons and the latter are of fast neutrons, respectively. Accordingly, for example, by covering the neutron detector 150 with a material impervious to neutrons (neutron absorber), it becomes possible to detect only the fission neutron component 140. Examples of materials to be such a neutron absorber include boron, cadmium, and the like. Thereby, detection or quantitative analysis of a nuclear material in the sample S can be performed. In this case, the neutron radiation N1 is set to have a pulse form as described above, where the pulse duration is controlled to be, for example, as short as about 10 *µ* s, in the case of the above-described 14 MeV fast neutrons, for example.

### [Citation List]

### [Non-Patent Literature]

[Non-Patent Document 1] Coop, K. L., "Neutron dieaway methods for criticality safety measurements of fissile waste" , Los Alamos National Laboratory, LA-UR-89-2124 (1989).

### SUMMARY OF INVENTION

### [Technical Problem]

In the method described above, only a nuclide whose fission reaction is induced by thermal neutrons can be detected (quantitatively analyzed), and such a nuclide is limited to ²³³U, ²³⁵U, ²³⁹Pu, ²⁴¹Pu or the like. That is, in the method, only such limited ones of nuclides as described above can be detected (quantitatively analyzed), and it is difficult to perform detection (quantitative analysis) of those which are similarly desired to be detected (quantitatively analyzed) as a nuclear material but whose fission reaction is hardly induced by thermal neutrons, while easily done by fast neutrons, such as ²³⁸U, ²⁴⁰Pu, ²⁴²Pu, ²⁴⁴Pu, ²³²Th, ²³⁷Np, and the like.

Further, it is often the case that different materials (nuclides) are simultaneously present in the sample S to analyze. Such materials include also those which are to be a neutron absorber described above, such as boron, cadmium, and the like. In such a case, thermal neutrons are absorbed also by such materials, and it accordingly is difficult to perform detection (quantitative analysis) of a nuclear material by using the method. Specifically, it has been impossible for the DDA to enable detection (quantitative analysis) of a nuclear material in a sample containing, for example, 0.5 wt% or more of boron.

Accordingly, there is significant limitation on samples and materials to measure in the conventional method, and it has been desired to enable detection (quantitative analysis) of materials in a variety of samples with high accuracy.

The present invention has been made in view of the above-described problem, and is aimed at providing a technology for solving the problem.

### [Solution to Problem]

To solve the above-described problem, the present invention has been configured as follows.

A material detection device according to the present invention is a material detection device for detecting a material consisting of a specific nuclide in a sample, and is characterized by including: a neutron source for generating irradiation neutrons to be emitted onto the material, the irradiation neutrons being neutrons that cause the nuclide to generate a nuclear reaction to emit two or more neutrons; two neutron detectors for detecting the neutrons emitted from the sample side, at mutually different locations; and an analysis unit configured to create a histogram of time difference between a first pulse output that is output from one of the two neutron detectors each time a neutron is detected, and a second pulse output that is output from the other one of the two neutron detectors each time a neutron is detected, subsequently divide the histogram into a first region having a flat characteristic with respect to the time difference, two second regions each showing a distribution having a peak on respective ones of the positive and negative time difference side, and a third region having a peak between the two second regions, and detect the material on the basis of a count value of the third region.

The material detection device of the present invention is characterized by that the analysis unit performs quantitative analysis of the material on the basis of the count value of the third region.

The material detection device of the present invention is characterized by that a nuclide of the material to be detected is any one of ²³²Th, ²³³Pa, ²³³U, ²³⁴U, ²³⁵U, ²³⁸U, ²³⁶Pu, ²³³Pu, ²³⁹Pu, ²⁴⁰Pu, ²⁴¹Pu, ²⁴²Pu, ²⁴⁴Pu, ²³⁷Np, ²⁴¹Am, ²⁴²Am, ²⁴³Am, ²⁴⁴Cm, ²⁴⁵Cm, and ²⁴⁶Cm.

The material detection device of the present invention is characterized by that the energy of the irradiation neutrons is set lower than an energy determined according to the material.

The material detection device of the present invention is characterized by that a nuclide of the material to be detected is a nuclide that emits two or more neutrons simultaneously by a nuclear reaction.

The material detection device of the present invention is characterized by that the number of the neutron detectors included is three or more, and that the analysis unit calculates the time difference and thereby creates the histogram in terms of each combination of two neutron detectors among the three or more neutron detectors.

### [Advantageous Effects of Invention]

With the above-describe configuration, the present invention enables detection of a variety of materials in a variety of samples with high accuracy.

### BRIEF DESCRIPTION OF DRAWINGS

FIG. 1 is a diagram showing a configuration of a material detection device according to an embodiment of the present invention.
FIG. 2 is a diagram schematically showing outputs of two neutron detectors in a material detection device according to an embodiment of the present invention.
FIG. 3A is the first one of diagrams illustrating a shape of a histogram of time difference obtained in a material detection device according to an embodiment of the present invention.
FIG. 3B is the second one of diagrams illustrating a shape of a histogram of time difference obtained in a material detection device according to an embodiment of the present invention.
FIG. 4 is a diagram showing difference in histogram depending on whether or not a nuclear material is present in a sample, in a material detection device according to an embodiment of the present invention.
FIG. 5 is a diagram showing a result of calculating a calibration curve for the amount of uranium oxide in a sample, in a material detection device according to an embodiment of the present invention.
FIG. 6 is a diagram showing a result of calculating a calibration curve for the amount of uranium oxide amount in a sample doped with boron, in a material detection device according to an embodiment of the present invention.
FIG. 7 is a diagram illustrating a principle of a conventional method for detecting or quantitatively analyzing a nuclear material by detecting nuclear fission neutrons.

### DETAILED DESCRIPTION

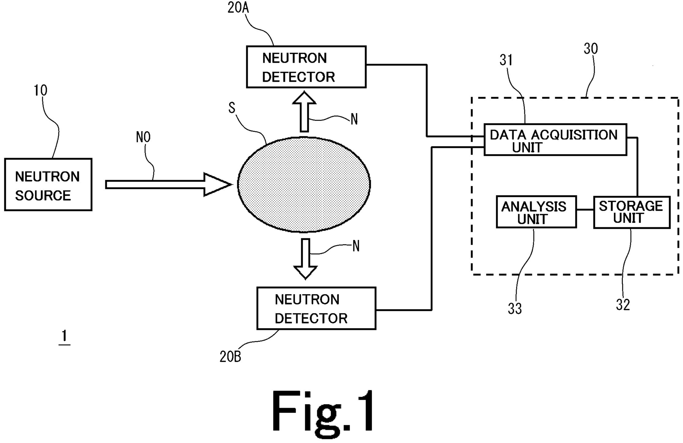

In a material detection device according to an embodiment of the present invention, the intensity of neutrons (fission neutrons or emission neutrons) emitted following absorption of irradiation neutrons in a material (nuclide) subject to detection of its presence/absence or quantitative analysis (hereafter collectively referred to as "analysis") is identified in a manner of discriminating it from the intensity of an irradiation neutron component, which is also of fast neutrons. A configuration of the material detection device 1 is shown in FIG. 1. The configuration is different from that shown in FIG. 7 in that two independent neutron detectors 20A and 20B for detecting, at different locations, neutrons (detection target neutrons N) emitted from a sample S by irradiation with neutron radiation N0 (irradiation neutrons). As the neutron detectors 20A and 20B, a well-known neutron detector using a liquid scintillator may be employed. The neutron detectors 20A and 20B do not necessarily need to have an identical configuration. While also radiation other than that of neutrons (of gamma rays, or the like) is usually detected by the neutron detectors 20A and 20B, it is assumed here that such radiation other than that of neutrons is reduced by shielding or the like, or discrimination of output pulses in terms of waveform, height, or the like is performed, and as a result, the major portion of detected radiation consists of neutrons.

As will be described later, a reaction caused by irradiation neutrons in a material to analyze is not limited to a fission reaction, in the present invention, and accordingly, also a material (nuclide) other than nuclear materials can be analyzed. However, from the viewpoint of comparison with the prior art, the following descriptions will be given assuming that a material to analyze is a nuclear material, and that neutrons emitted by a reaction (other than irradiation neutrons after being scattered) are fission neutrons.

In contrast to that the neutron source 110 used in the DDA emits fast neutrons temporally controlled in a pulsed manner, a neutron source 10 used in the present invention emits fast neutrons (irradiation neutrons) as neutron radiation N0 continually at random timings. As the neutron source 10, a DT neutron source utilizing D(deuterium)-T(tritium) reaction, or the like, can be employed.

Therefore, unlike the DDA in which the measurement is performed after the irradiation neutrons are thermalized, irradiation neutrons to cause the fission reaction in the nuclear material (fission material) to analyze are fast neutrons, in the present invention. Accordingly, while neutrons (detection target neutrons N) detected by the neutron detectors 20A and 20B are roughly classified into an irradiation neutron component and a fission neutron component, both of them are of fast neutrons.

A computer 30 calculates the fission neutron component from measurement results of the neutron detectors 20A and 20B, and thereby analyzes a nuclear material (material). A method and a principle of the analysis will be described below.

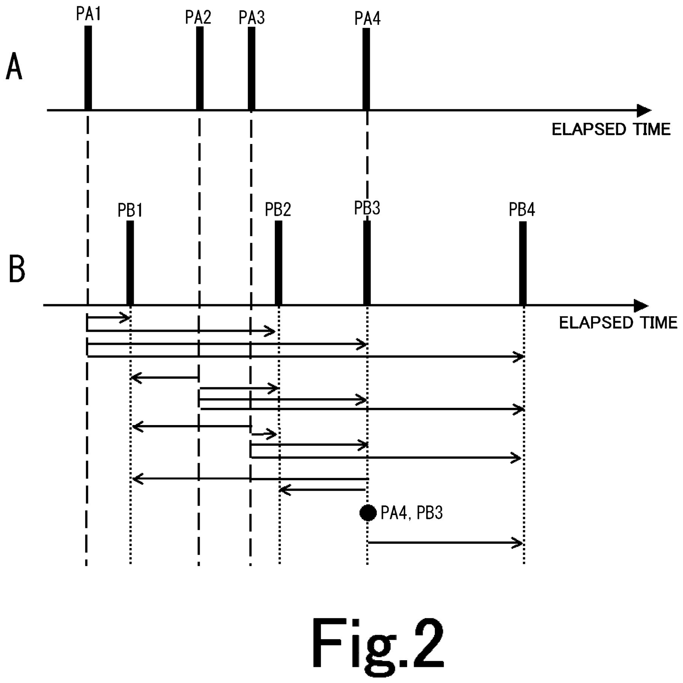

As described above, in both of the neutron detectors 20A and 20B, the irradiation neutron component and the fission neutron component are perceived in a form of a pulse output due to the detection target neutrons N, equally and undiscriminatingly. An example of outputs from the neutron detectors 20A and 20B in the configuration of FIG. 1 is schematically shown in FIG. 2. There, the horizontal axis represents elapsed time, and A shows elapsed times for outputs (first pulse outputs) of the neutron detector 20A, and B does elapsed times for outputs (second pulse outputs) of the neutron detector 20B. In A, pulses PA1 to PA4, each corresponding to one detection of neutrons, were sequentially perceived, and similarly in B, pulses PB1 to PB4 were sequentially perceived. The temporal relationship between the pulses is assumed to be as that shown in FIG. 2.

In FIG. 2, time differences between pulses in A (the first pulse outputs) and those in B (the second pulse outputs) are shown as ranges indicated by arrows in the lower part of FIG. 2. While the time differences are shown in FIG. 2 only for the outputs of B with reference to those of A, the time difference can be defined such that the time difference between the pulse PA1 and the pulse PB1 with reference to the pulse PA1 and that with reference to the pulse PB1 have an identical absolute value with opposite signs, for example. In FIG. 2, only time differences with reference to the pulses on the side of the neutron detector 20A are shown. In FIG. 2, a black dot indicates that a pulse PA3 and a pulse PB4 are simultaneously generated (with zero time-difference). There, the time differences are shown with respect to only four pulses in each of A and B, but practically, more pulses over a longer time period may be taken into consideration in a similar manner.

As described above, neutrons (fast neutrons) detected by each of the neutron detectors 20A and 20B are classified into two types, that is, (1) irradiation neutrons (irradiation neutron component) having been scattered (for example, in the sample S) and (2) fission neutrons (fission neutron component) emitted from the sample S. It is at least difficult to discriminate between the origins (whether an irradiation neutron component or a fission neutron component) on the basis of only each single pulse shown in FIG. 2 itself.

In a fission reaction to generate type-(2) fission neutrons, when the nuclear material is ²³⁵U, ²³⁸U, ²³⁹Pu, ²⁴⁰Pu, ²³³U or the like, two or three neutrons are simultaneously emitted by irradiation with fast neutrons. That is, when any of such nuclear materials is present in the sample S, two (or more) neutrons are emitted by each fission reaction. There, the two neutrons are emitted within such an extremely short time as about 10 fs (substantially at the same time). That is, when neutrons are detected respectively by the neutron detectors 20A and 20 B (substantially) at the same time, they can be assumed to be type-(2) fission neutrons emitted from any of the nuclear materials. In FIG. 2, the pulses PA4 and PB3 correspond to such a combination.

However, as the sample S has a finite size in FIG. 1, even when such two neutrons (fission neutrons) are generated simultaneously at one point in the sample S and one of them is detected by the neutron detector 20A and the other by the neutron detector 20B, there occurs difference between the two neutrons in flight path distance, and accordingly, they are detected not precisely at the same time. For example, when the sample S is set to be 20 cm in size, a time difference due to such difference in flight path distance is 25 ns or less, as the energy of fission neutrons usually is in the range of 0.5 MeV to 2 MeV.

Further, as there may occur scattering of the neutrons, for either of type-(1) irradiation neutrons and type-(2) fission neutrons, there occurs two kinds of cases, that is, a case in which a neutron is detected by only one of the detectors, and a case in which a neutron is detected and also scattered by one of the detectors and is subsequently detected again by the other one of the detectors. In the latter case, a time difference between the detections by the two detectors is determined by the velocity (energy) of the neutron and the distance between the detectors. In the arrangement of FIG. 1, the distance is larger than the above-described size of the sample S. For example, when the distance is 50 cm (when the distance between each detector and the sample S is set at 15 cm in the case of setting the size of the sample S at 20 cm in FIG. 1, as described above) and the energy is 1 MeV, the time difference is calculated to be about 35 ns. That is, when the time difference is calculated for a combination corresponding to such a case, the absolute value of the calculated time difference should be such a value. This time difference is larger than that in the above-described case of detecting two fission neutrons generated at the same time. As has been described, neutrons to be detected by the neutron detectors 20A and 20B include type-(3) neutrons that are detected by one of the detectors and subsequently are detected also by the other one of the detectors (redetected neutrons). The origin of the redetected neutrons is either of type-(1) and type-(2) neutrons.

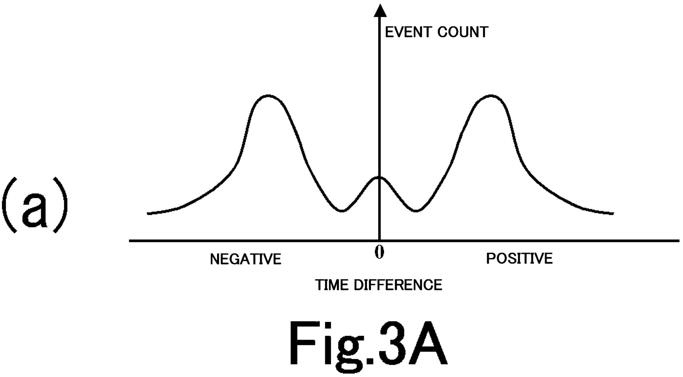

When the irradiation neutrons are generated at random timings temporally, as described above, the randomness is reflected in the histogram of time difference shown in FIG. 2, and additionally, such a feature depending on the combination as described above is reflected there. FIG. 3A schematically shows a shape of such a histogram obtained when a nuclear material is present in the sample S (neutrons detected by the neutron detectors 20A and 20B include type-(2) fission neutrons) (actually measured shapes are described later in examples). As described above, time differences calculated for respective combinations of the pulses may be either positive or negative, and therefore, the histogram ideally is symmetrical with reference to the origin (zero time-difference point). However, the histogram is not symmetrical with reference to the origin in such a case as when the neutron detection efficiency is different between the neutron detectors 20A and 20B due to their difference in size or the like. In addition, in such cases as when the temporal response speed is different between the neutron detectors 20A and 20B, and as when a pulse output delay circuit is incorporated in either of the neutron detectors, it is possible that the histogram has its symmetrical center not coincide with the origin (zero time-difference point).

The distribution in the histogram differs depending on which type of combination of two neutrons the time differences constituting the histogram have been calculated for. This feature will be described below.

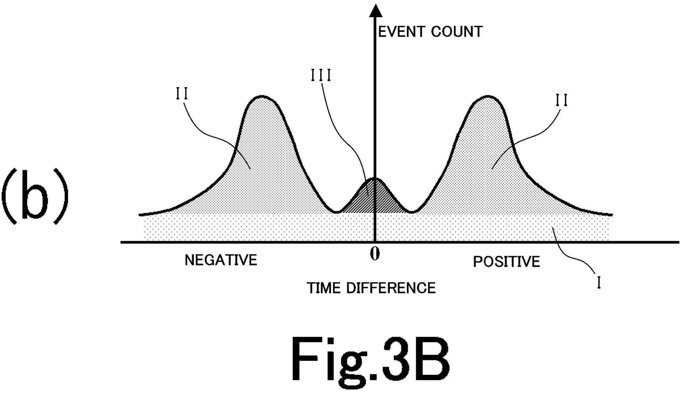

The histogram shape may be regarded as a combination of three regions such as shown in FIG. 3B. First, a region I (first region) in FIG. 3B is a component that is random in terms of the time differences. As described above, irradiation neutrons of type-(1) are generated temporally at random, and generation of fission neutrons of type-(2) induced by the irradiation neutrons occurs also temporally at random. Accordingly, among the combinations whose time differences have been calculated, and with respect to neutrons other than that having changed into redetected neutrons of type-(3) described above, combinations of neutrons both being irradiation neutrons of type-(1), combinations of neutrons both being fission neutrons of type-(2) but not having been generated by simultaneous reactions, and combinations of an irradiation neutron of type-(1) and a fission irradiation neutron of type-(2) constitute the region I.

Further, time differences for combinations of a redetected neutron of type-(3) and any neutron other than the one being the origin of, and therefore identical with, the redetected neutron (the one corresponding to the first detection of the redetected neutron) also are temporally at random, and accordingly constitute the region I, because there is no correlation between the neutrons in each of the combinations.

A region II (second region) in FIG. 3B is a component having a peak at a finite time difference (≠ 0). Combinations corresponding to the region II are that having been described just above, that is, combinations of a redetected neutron of type-(3) and an identical neutron being the origin of the redetected neutron (cases where the neutron detectors 20A and 20B detect the identical neutron). Such a neutron may originate from either of an irradiation neutron of type-(1) and a fission neutron of type-(2). While the distance between the detectors is constant, the region II is broadened to an extent according to the distribution of neutron energy.

That is, regardless of whether detected neutrons are irradiation neutrons of type-(1) or fission neutrons of type-(3), cases of detecting different neutrons and that of detecting an identical neutron, in the neutron detectors 20A and 20B, correspond to the flat region I and the region II, respectively,

On the other hand, a region III (third region) corresponds to combinations of two neutrons to be detected at (substantially) the same time in respective ones of the two detectors. Cases corresponding to the region III are, among the above-described examples, only that where the two detected neutrons both are fission neutrons of type-(3) emitted at the same time, as described above.

That is, in FIG. 3B, in contrast to that both of the regions I and II are created due to either of irradiation neutrons and fission neutrons, the region III is created due to only fission neutrons (a fission neutron component) generated by a fission reaction simultaneously emitting two or more neutrons. Therefore, by identifying the region III and then the number of events corresponding thereto, it is possible to detect the presence of a nuclear material having generated the fission reaction or to perform quantitative analysis thereof. That is, when the histogram is created based on time differences between each neutron detection by the neutron detector 20A and that by the neutron detector 20B, and the region III is identified therein, the magnitude of the region III corresponds to the amount of the nuclear material. Therefore, when the region III is identified and its magnitude represented by a count value, such as an integrated value or a peak value of the number of events, exceeds a fixed value, it can be determined that a nuclear material to analyze is present.

Here, as described above, the peak of the region III may be caused to shift from the zero time-difference point by a delay of the outputs of the neutron detectors, or the like. Even in such a case, the region II is identified on each of the positive and negative time difference sides, where the region III is present between the regions II, and accordingly, the region III can be identified in view of this fact.

Unlike the conventional DDA, neutrons employed as the irradiation neutrons to cause a fission reaction are fast neutrons, in the present invention. Therefore, even ²³⁸U or the like, whose reaction is hardly induced by thermal neutrons but is easily induced by fast neutrons, can be a target for the analysis. Accordingly, nuclides able to be analyzed (detecting whether present or not, or quantitative analysis) in the material detection device 1 include ²³²Th, ²³³Pa, ²³³U, ²³⁴U, ²³⁵U, ²³⁸U, ²³⁶Pu, ²³⁸Pu, ²³⁹Pu, ²⁴⁰Pu, ²⁴¹Pu, ²⁴²Pu, ²⁴⁴Pu, ²³⁷Np, ²⁴¹Am, ^{242m}Am, ²⁴³Am, ²⁴⁴Cm, ²⁴⁵Cm, and ²⁴⁶Cm.

A variety of materials may be contained in the sample S, and there may be a case of containing a material to act as a neutron absorber, such as boron. In such a case, the conventional DDA or the like may become unable to perform the nuclear material analysis, as a result of the fact that the irradiation neutrons (thermal neutrons) are absorbed also by the neutron absorber. In contrast, for fast neutrons, the probability of reacting with such a neutron absorber is low. For example, such nuclear absorbers include ¹⁰B, ¹¹³Cd and ¹⁵⁷Gd, for which ratios of their reaction probability with fast neutrons (14 MeV) to that with thermal neutrons (25 meV) are as extremely low as 1.2 × 10⁻⁵, 4.2 × 10⁻⁷ and 3.8 × 10⁷, respectively, and therefore, the nuclear material analysis can be performed in the present invention even when such nuclear absorbing materials are contained in the sample S.

In order to significantly identify the region III in the characteristics of FIG. 3B, the number of events (neutron detection events) whose time differences are to be obtained is required to be large so as to reduce statistical errors. In this respect, the number of events can be easily increased in the present invention because it is not necessary to use neutron radiation emitted only during a short time period, unlike in the DDA, but neutron radiation emitted continually over a long time period can be used.

In the DDA, the irradiation neutrons are emitted in a pulsed manner, and it accordingly is required to synchronize the neutron detection with a time of halting the emission of the irradiation neutrons, so that the computer for control ling the measurement needs to control the synchronization. In contrast, such timing control for synchronizing the neutron source 10 with data acquisition is not required in the material detection device 1. As a result, the configuration of the material detection device 1 may be simplified.

In FIG. 1, a data acquisition unit 31 in the computer 30 acquires detection results of the neutron detectors 20A and 20B in such a manner as that illustrated in FIG. 2, and stores the detection results into a storage unit 32 configured with a hard disk and the like. Based on the detection results thus stored, an analysis unit 33 creates such a histogram of time difference as that illustrated in FIG. 3A, and stores the histogram into the storage unit 32.

Subsequently, for example, regarding the region I in FIG. 3B as a DC component of the histogram, the analysis unit 33 performs fitting of the region II to a Gaussian distribution having a peak at a nonzero time-difference, and fitting of the region III to a Gaussian distribution having a peak at a zero time-difference, and thereby can identify the region III. Alternatively, in a more convenient way, regarding a minimum value of the number of events in a region between the peak of the region II and the peak of the region III as a DC component, a distribution around the origin after subtracting from it the DC component may be identified as the region III, as shown in FIG. 3B. Such an estimation method of the region III may be appropriately set according to the shape of actual measurement results. The integrated intensity (average intensity) and peak intensity of thus identified region III are proportional to the number of detected fission neutrons (the amount of nuclear material).

The neutron detectors 20A and 20B used there preferably are the ones having a time resolution at a degree of enabling to resolve the peaks in FIG. 3B. Such a time resolution is 10 ns or less, for example, and various types neutron detectors may be employed.

Hereinafter, measurement results in an embodiment of the present invention will be described. Here, a DT neutron source (with irradiation neutron energy of 14 MeV) was used as the neutron source 10, and a combination of a liquid scintillator (EJ-301) and a photomultiplier tube is used as each of the neutron detectors 20A and 20B. As the sample S, about 80 g of U0₂ (98% ²³⁸U and 2% ²³⁵U) was used, and also a dummy sample of polyethylene (imitating only neutron scattering by U0₂ without causing nuclear fission) was used for comparison.

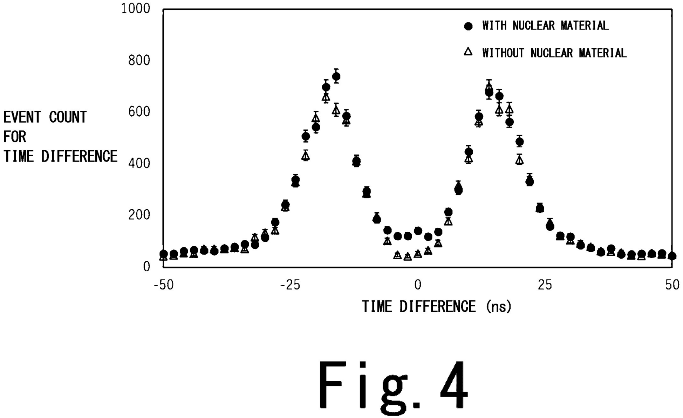

Results of measuring the characteristic represented by FIG. 3A on samples respectively containing and not containing a nuclear material (U0₂ described above) are shown in FIG. 4. As seen there, the regions I and II are not different between the cases with and without the nuclear material, but a peak at the center (peak of the region III) is significantly present only in the case with the nuclear material. This enables analysis of the nuclear material, as described above. The results of FIG. 4 agreed with results of simulation using a radiation motion simulation code PHITS ("Features of Particle and Heavy Ion Transport Code System (PHITS) ver. 3.02", Tatsuhiko Sato, Yosuke Iwamoto, Shintaro Hashimoto, Tatsuhiko Ogawa, Takuya Furuta, Shin-Ichiro Abe, Takeshi Kai, Pi-En Tsai, Norihiro Matsuda, Hiroshi Iwase, Nobuhiro Shigyo, Lembit Sihver and Koji Nitta, Journal of Nuclear Science and Technology, vol. 55 (5-6), p684 (2018)).

When performing quantitative analysis of a nuclear material, a nuclear material (nuclide) to be quantitatively analyzed is determined in advance, and measurements on reference samples containing different amounts of the nuclear material are performed to create a calibration curve (relationship between the amount of the nuclear material and the number of events (count value) in the region III). Then, by comparing measurement results on the sample S to analyze with the calibration curve, the amount of the nuclear material in the sample S is calculated. Storing the obtained calibration curve into the storage unit 32, the calculation can be performed by the analysis unit 33.

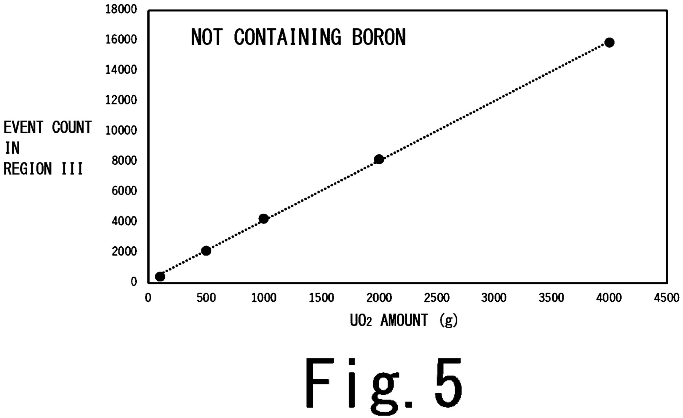

In the present case, such a calibration curve was calculated using the PHITS described above, by setting the amounts of U0₂ in reference samples at 100 g, 500 g, 1000 g, 2000 g, and 4000 g. The result is shown in FIG. 5, where sufficient linearity was obtained. It accordingly is obvious that the amount of U0₂ can be calculated from results of the measurement using the calibration curve.

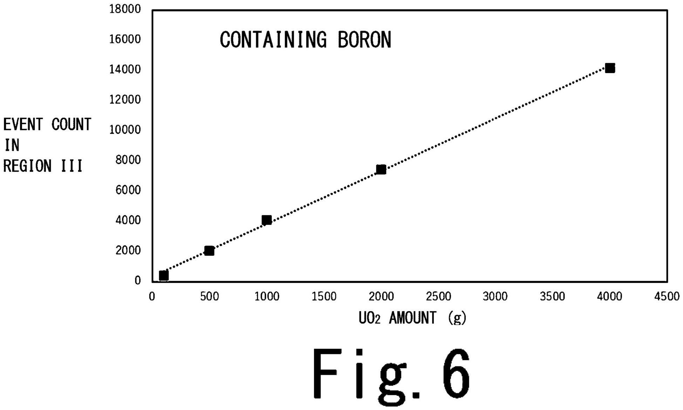

Further, as described above, the present method is different from the DDA in that it enables the nuclear material analysis even when a neutron absorber is contained in the sample S. FIG. 6 shows a result of performing the same calculation as that done in FIG. 5 on the reference samples added with such a neutron absorber, boron, of 10 wt% in amount with reference to U0₂. In this case, while the numbers of detected neutrons (on vertical axis) decrease by 2 to 12%, a similarly excellent calibration curve was obtained. In contrast, such analysis of U is difficult for the DDA using thermal neutrons when such an amount of boron is added.

In the example just described above, the material to analyze is assumed to be a nuclear material (nuclear fission material: nuclear fuel material) such as ²³⁸U. However, any nuclide capable of emitting two, three, four or more neutrons in its reaction with a single irradiation neutron ((n,2n), (n, 3n), (n,4n) or the like,) can be similarly analyzed. Specifically, for example, examples of the (n, 2n) reaction include ⁵⁶Fe(n, 2n) ⁵⁵Fe, ⁶⁵Cu(n, 2n)⁶⁴Cu, ²⁰⁸Pb(n, 2n)²⁰⁷Pb, ²⁰⁹Bi(n, 2n)²⁰⁸Bi, and the like. Accordingly, when any one of ⁵⁶Fe, ⁶⁵Cu, ²⁰⁸Pb, ²⁰⁹Bi and the like is present in the sample S, the nuclide can be similarly analyzed because two neutrons (emission neutrons) are emitted by neutron absorption.

That is, in contrast to that a target for the quantitative analysis in the conventional DDA or the like is limited to specific nuclear materials, the material detection device 1 described above can take also a variety of materials (nuclides) other than nuclear materials into a target for the analysis by its identifying the above-described region III as an emission neutron component originating from only the emission neutrons.

On the other hand, when the analysis is aimed at analyzing only a nuclear material such as ²³⁸U in the sample S, ⁵⁶Fₑ and the like described above (detectable nuclides other than nuclear materials) may be a material disturbing the nuclear material analysis because of its contributing to creation of the region III as well as the nuclear material.

In this respect, for example, the analysis of a nuclear material such as ²³⁸U can be made easy by adjusting the energy of the irradiation neutrons (fast neutrons). While there are many nuclides capable of causing a reaction, other than the fission reaction, with the irradiation neutrons to emit two or more neutrons, ones other than ⁹Be among such nuclides cause the reaction only when the energy of the irradiation neutrons is high (3 MeV or higher). Therefore, by setting the energy of the irradiation neutrons at lower than 3 MeV, the influence of the nuclides except ⁹Be can be removed. It is very rare for ⁹Be to be contained in the sample S, compared with ⁵⁶Fe and the like, and accordingly, the nuclear material analysis is made substantially easy by the above-described way.

When the energy of the irradiation neutrons is set at lower than 10 MeV, for example, many of nuclides with a small mass number do not cause a reaction to emit two or more neutrons, but, in contrast, many of nuclides with a large mass number cause a reaction to emit two or more neutrons, and accordingly, detection or quantitative analysis of a nuclide with a large mass number becomes easy. This is particularly effective for detection or quantitative analysis of a material when the number of nuclides in the sample is small. By thus adjusting the energy of the irradiation neutrons depending on the sample, the material analysis is made particularly easy. That is, by setting the energy of the irradiation neutrons lower than that to be set according to a nuclide to analyze, analysis of the nuclide can be made particularly easy.

The energy of the irradiation neutrons may be adjusted by varying the type of the neutron source 10. The neutron source 10 does not need to emit neutron radiation controlled in a pulsed manner, unlike in the DDA, and accordingly, more types of neutron sources may be employed as the neutron source 10 compared with in the DDA. Reactions used in such neutron sources include (D, D), (D, T), (*α*, n), (e, n), (γ, n) and the like. While the energy of irradiation neutrons in the above-described case of the DT neutron source (using (D, T) reaction) is 14 MeV, a DD neutron source (using (D, D) reaction) to emit irradiation neutrons of 2.45 MeV energy and a ¹²⁴Sb-Be neutron source may be employed. Alternatively, the energy of irradiation neutrons may be adjusted by combining the DT neutron source with a moderator. In any of the cases, in order to make it easy to identify the three regions, the irradiation neutrons preferably are emitted temporally at random and continually, and preferably are not set to be in a specific oscillation shape, unlike in the DDA. However, even when the irradiation neutrons have a specific oscillation shape like in the DDA, the detection or quantitative analysis of a material can be performed by performing the measurement only during the oscillation occurs, and thereby making the measurement condition similar to that where neutrons are emitted continuously, for example.

While the neutron radiation N0 has been assumed to be of fast neutrons in the above-described configuration, it is obvious that, in the configuration where only timings of detection by the two neutron detectors are used for the analysis, even if the neutron radiation N0 is set to be of thermal neutrons, the analysis can be similarly performed when the sample contains no neutron absorber. Also from this viewpoint, various types of neutron sources may be employed in the configuration.

While two neutron detectors are used in the configuration of FIG. 1, three or more neutron detectors may be used there. In that case, the same analysis as that having been described above can be performed, by calculating time differences between respective outputs of two different ones of the neutron detectors, and thereby creating a histogram of the time differences as having been described. Such use of a larger number of neutron detectors enables increasing the detection efficiency of fission neutrons (emission neutrons) and thereby increasing the material detection efficiency or performance of the quantitative analysis. Further, in the above example, any configuration enabling simultaneous neutron detection at different locations can be employed, and accordingly, when neutrons can be detected at different parts (by different detection units) within a single detector unit, individual ones of the detection units are regarded as those of the neutron detectors described above.

### [Reference Signs List]

1 material detection device
9 nuclear material detection device
10, 110 neutron source
20 A, 20 B, 150 neutron detector
30 computer
31 data acquisition unit
32 storage unit
33 analysis unit
130 irradiation neutron component
140 fission neutron component
I first region
II second region
III third region
N neutron to detect
N0, N1 neutron radiation (irradiation neutrons)
S SAMPLE

## Claims

1. A material detection device for detecting a material consisting of a specific nuclide in a sample,
the material detection device including:
a neutron source for generating irradiation neutrons to be emitted onto the sample, the irradiation neutrons being neutrons that cause the nuclide to generate a nuclear reaction to emit two or more neutrons;
two neutron detectors for detecting the neutrons emitted from the sample side, at mutually different locations; and
an analysis unit configured to create a histogram of time difference between a first pulse output that is output from one of the two neutron detectors each time a neutron is detected, and a second pulse output that is output from the other one of the two neutron detectors each time a neutron is detected, subsequently divide the histogram into a first region having a flat characteristic with respect to the time difference, two second regions each showing a distribution having a peak on respective ones of the positive and negative time difference sides, and a third region having a peak between the two second regions, and detect the material on the basis of a count value of the third region.

2. The material detection device according to claim 1,
wherein the analysis unit performs quantitative analysis of the material on the basis of the count value of the third region.

3. The material detection device according to claim 1 or 2,
wherein a nuclide of the material to be detected is any one of ²³²Th, ²³³Pa, ²³³U, ²³⁴U, ²³⁵U, ²³⁸U, ²³⁶Pu, ²³³Pu, ²³⁹Pu, ²⁴⁰Pu, ²⁴¹Pu, ²⁴²Pu, ²⁴⁴Pu, ²³⁷Np, ²⁴¹Am, ^{242m}Am, ²⁴³Am, ²⁴⁴Cm, ²⁴⁵Cm, and ²⁴⁶Cm.

4. The material detection device according to claim 3,
wherein energy of the irradiation neutrons is set lower than an energy determined according to the material.

5. The material detection device according to claim 1 or 2,
wherein a nuclide of the material to be detected is a nuclide that emits two or more neutrons simultaneously by a nuclear reaction.

6. The material detection device according to claim 1 or 2,
wherein the number of the neutron detectors included is three or more, and
wherein the analysis unit calculates the time differences and thereby creates the histogram, in terms of each combination of two neutron detectors among the three or more neutron detectors.
